# EUROPEAN PATENT APPLICATION

(11) **EP 2 713 377 A1**
(43) Date of publication of application: **02.04.2014**
(21) Application number: 13185576.9
(22) Date of filing: 23.09.2013
(51) Int. Cl.: H01F 41/22, G11B 5/65, G11B 5/73, G11B 5/85, H01F 10/14, H01F 10/16

(54) **Methods of forming magnetic materials and articles formed thereby**

(30) Priority: 28.09.2012 US 201213630036
(71) Applicant: Seagate Technology LLC, Cupertino CA 95014 (US)
(72) Inventor: Sahoo, Sarbeswar, Shakopee, MN 55379 (US); Zhu, Meng, Niskayuna, NY 12309 (US); Kautzky, Michael, Eagan, MN 55122 (US)
(74) Representative: Miller Sturt Kenyon

(57) **Abstract**

Methods of forming a layer of magnetic material on a substrate, the method including: configuring a substrate in a chamber; controlling the temperature of the substrate at a substrate temperature, the substrate temperature being at or below about 250° C; and introducing one or more precursors into the chamber, the one or more precursors including: cobalt (Co), nickel (Ni), iron (Fe), or combinations thereof, wherein the precursors chemically decompose at the substrate temperature, and wherein a layer of magnetic material is formed on the substrate, the magnetic material including at least a portion of the one or more precursors, and the magnetic material having a magnetic flux density of at least about 1 Tesla (T).

## Description

### BACKGROUND

Methods of forming magnetic materials often involve high temperatures. If substrates, which may include already deposited layers or structures, are sensitive to high temperatures, currently utilized methods of forming magnetic materials can affect or even destroy properties of the already deposited layers or structures. Therefore, there remains a need for methods of depositing magnetic materials that do not rely on high temperature processes.

### SUMMARY

Disclosed herein are methods of forming a layer of magnetic material on a substrate, the method including: configuring a substrate in a chamber; controlling the temperature of the substrate at a substrate temperature, the substrate temperature being at or below about 250° C; and introducing one or more precursors into the chamber, the one or more precursors including: cobalt (Co), nickel (Ni), iron (Fe), or combinations thereof, wherein the precursors chemically decompose at the substrate temperature, and wherein a layer of magnetic material is formed on the substrate, the magnetic material including at least a portion of the one or more precursors, and the magnetic material having a magnetic flux density of at least about 1 Tesla (T).

An article including a substrate; and a layer of magnetic material deposited on the substrate, wherein the magnetic material includes cobalt (Co), iron (Fe), nickel (Ni), or a combination thereof, the magnetic material has a magnetic flux density of at least about 1 Tesla, the grain size of the magnetic material is from about 10 nm to about 50 nm, and the magnetic material includes less than about 1% oxygen by weight and includes non-magnetic impurities at a level that is undetectable by Auger Electron Spectroscopy.

Disclosed herein are methods of forming a layer of magnetic material on a substrate, the method including: configuring a substrate in a chamber; controlling the temperature of the substrate at a substrate temperature, the substrate temperature being at or below about 250° C; and introducing one or more precursors into the chamber, the one or more precursors including carbonyl compounds of cobalt (Co), nickel (Ni), iron (Fe), or combinations thereof, wherein a layer of magnetic material is formed on the substrate, the magnetic material comprising at least a portion of the one or more precursors, and the magnetic material having a magnetic flux density of at least about 1 Tesla (T).

### BRIEF DESCRIPTION OF THE DRAWINGS

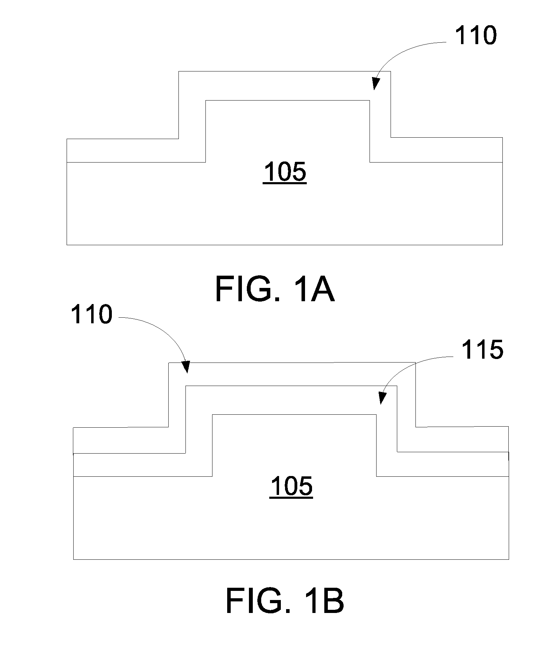

**FIGs. 1A** and **1B** illustrate exemplary articles disclosed herein.

The figures are not necessarily to scale. Like numbers used in the figures refer to like components. However, it will be understood that the use of a number to refer to a component in a given figure is not intended to limit the component in another figure labeled with the same number.

### DETAILED DESCRIPTION

In the following description, reference is made to the accompanying set of drawings that form a part hereof and in which are shown by way of illustration several specific embodiments. It is to be understood that other embodiments are contemplated and may be made without departing from the scope of the present disclosure. The following detailed description, therefore, is not to be taken in a limiting sense.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the properties sought to be obtained by those skilled in the art utilizing the teachings disclosed herein.

The recitation of numerical ranges by endpoints includes all numbers subsumed within that range (e.g. 1 to 5 includes 1, 1.5, 2, 2.75, 3, 3.80, 4, and 5) and any range within that range.

As used in this specification and the appended claims, the singular forms "a", "an", and "the" encompass embodiments having plural referents, unless the content clearly dictates otherwise. As used in this specification and the appended claims, the term "or" is generally employed in its sense including "and/or" unless the content clearly dictates otherwise.

"Include," "including," or like terms means encompassing but not limited to, that is, including and not exclusive. It should be noted that "top" and "bottom" (or other terms like "upper" and "lower") are utilized strictly for relative descriptions and do not imply any overall orientation of the article in which the described element is located.

Disclosed herein are methods of forming layers of magnetic materials and articles including layers of magnetic materials. Methods utilized herein may be accomplished with or without seed layers, can offer a high level of control over layer composition, and can offer accurate control of thickness. Layers of magnetic materials formed using disclosed methods can be relatively highly conformal on two or three dimensional surfaces or structures, can have desirable grain sizes, can have low impurity levels, and can have desirable magnetic properties.

Disclosed methods are chemical vapor deposition (CVD) methods. CVD is a process in which a layer is deposited by decomposition of a precursor. Disclosed methods can be carried out using any CVD apparatus or system. Exemplary CVD apparatuses that can be utilized to carry out disclosed methods or fabricate disclosed articles include for example, industrial scale CVD tools such as ASM EmerALD® or ASM Pulsar (ASM International N.V., Netherlands), Veeco NEXUS CVD (Veeco Instruments Inc., Plainview, NY), or CVD instruments from Oxford Instruments (Oxford Instruments, Oxfordshire, UK).

A first step in disclosed methods includes configuring a substrate in a chamber. Configuring a substrate within a chamber can be accomplished by simply placing the substrate in the chamber or by placing or positioning the substrate within an apparatus or device designed for holding the substrate. In some embodiments, the chamber or an assembly including or associated with the chamber can be designed to hold the substrate, this can be referred to as a substrate holder. In some embodiments, a substrate holder can provide a horizontal surface to support the substrate.

Disclosed methods can utilize any types of substrates. Substrates can be made of any material or materials, and can have any two or three dimensional structure. In some embodiments, substrates can also optionally include other layers or structures already formed (using any methods) thereon. In some embodiments, substrates can include already formed two or three-dimensional topography. In some embodiments, substrates can include magnetic readers and/or writers formed thereon or therein.

The chamber utilized herein may be part of a larger apparatus or system. The chamber can be designed or configured to control the pressure within the chamber, control components (for example gases) within the chamber, control the pressure of components within the chamber, control the temperature within the chamber, or some combination thereof. The chamber can also be designed or configured to control other parameters not discussed or mentioned herein.

Disclosed methods also include a step of controlling the temperature of the substrate. The temperature of the substrate is referred to herein as the substrate temperature. In some embodiments, the temperature of the substrate is more specifically, the temperature of the bulk of the substrate. In some embodiments, the substrate temperature can be controlled, or affected with the substrate holder. In such embodiments, the substrate holder can include or be configured with a heater which is coupled to the substrate holder. The heater can include, for example one or more resistive heating elements, a radiant heating system (e.g., a tungsten-halogen lamp), or a combination thereof for example.

Disclosed methods generally control the substrate temperature at relatively low temperatures. In some embodiments, the substrate temperature can be controlled at or below 250° C. In some embodiments, the substrate temperature can be controlled at or below 225° C. In some embodiments, the substrate temperature can be controlled at about 200° C. Generally, the substrate temperature is such that layers or structures already existing within or on the substrate are not detrimentally affected. Disclosed methods offer methods of forming magnetic materials at temperatures that do not detrimentally affect layers or structures already formed on or in the substrate.

Disclosed methods also include a step of introducing one or more precursors into the chamber. Precursors, as utilized herein, refer to compounds, part of which will ultimately be part of the deposited magnetic material. Precursors utilized herein are chosen so that they will chemically decompose at the substrate temperature. Chemically decompose means that at least one bond within the precursor compound will be broken and the precursor will separate into elements, simpler compounds, or molecular components (which may or may not be stable, charged, or both). The temperature at which a compound will chemically decompose is often referred to as the decomposition temperature.

Precursors generally include at least one element that is in the magnetic material being formed. In some embodiments, precursors can include metals, for example: cobalt (Co), nickel (Ni), iron (Fe), or combinations thereof. In some embodiments, precursors can also include rare earth metals that could be utilized to dope the Co, Ni, Fe, or combinations thereof. In some embodiments, precursors can include Co, Ni, Fe, or combinations thereof. In some embodiments, precursors can include Co and Fe for example.

Precursors can also include one or more elements, or groups of elements that are not included in the magnetic material being formed, which may be referred to herein as sacrificial elements. Such sacrificial elements may be present in the precursor in order to form a stable compound with the element of interest (which will ultimately be in the magnetic material). Sacrificial elements that are present in a group of elements, once the precursor is chemically decomposed, may be broken down into their individual elements. Upon chemical decomposition, such individual elements can be vaporized and become part of the gas within the chamber, thereby not formed into part of the magnetic material.

In some embodiments, sacrificial elements, groups they are present in, or both are chosen such that at the decomposition temperature (which in some embodiments is at or below the substrate temperature), the sacrificial elements will be converted into a gas which is not formed into the magnetic material. Exemplary sacrificial elements can therefore include elements that can form stable (thermodynamically favorable) compounds at the substrate temperatures. Exemplary sacrificial elements can be organic or can form organic groups. An organic element is carbon, and an organic group is one that includes carbon. Exemplary sacrificial elements can include, for example, carbon (C), oxygen (O), or combinations thereof (for example, CO (Carbon Monoxide). In some embodiments, sacrificial elements can be present in the precursor or precursors in a group or moiety or in an organic group. Exemplary moieties can include a carbonyl group (CO), which can also be described as carbon monoxide complexed with a metal.

Specific, exemplary precursors include, for example, iron carbonyl (Fe(CO)₅), cobalt carbonyl (Co₂(CO)₈), and nickel carbonyl (Ni(CO)₄). In some embodiments, Fe(CO)₅ and Co₂(CO)₈ can be utilized as precursors. Precursors can be liquid, solid, or gas. In some embodiments, precursors can be liquid, solid, or both. In some embodiments, one precursor that is utilized in a disclosed method can be a liquid and another precursor can be a solid. It should be noted that the state (solid, liquid, or gas) can be dictated, at least in part by the pressure and/or temperature at which the precursor is maintained. In some embodiments, Fe(CO)₅, and Co2(CO)₈ can be obtained from Strem Chemicals, Inc. (Newburyport, MA) Alfa Aesar (Ward Hill, MA), Materion Corporation (formerly Cerac, Inc., Suffolk, UK), or Gelest, Inc. (Morrisville, PA) for example.

Precursors are also chosen based at least in part on the ability to convert them to a gas, in order to form the layer of magnetic material. An exemplary precursor may be maintained as a liquid, and subjected to a temperature and/or pressure that converts it to a gas before (either immediately or longer) it is introduced into the chamber. An exemplary precursor may be maintained as a liquid, and be delivered through use of bubbling techniques (for example, by containing the liquid precursor in a bubbler reservoir through which an inert carrier gas is passed, thereby carrying the precursor into the chamber). An exemplary precursor may be maintained as a solid, and vaporized, by controlling the precursor bath temperature below or above the boiling temperature of the precursor chemical for example, before (either immediately or longer) it is introduced into the chamber. In some embodiments where the precursors are introduced into the chamber in a gaseous state, the amount of the precursors can be easier to control. In such embodiments, the pressure of the precursors within the chamber can be controlled in order to control the amount of each component in the final magnetic material.

As the precursors chemically decompose in the chamber, the layer of magnetic material is formed on the substrate. The portions of the precursors that are to form the magnetic material react at the surface of the substrate to form the desired magnetic material. As mentioned above, the components of the magnetic material can be controlled by choosing the correct precursors, the amount of the individual components within the magnetic material can be controlled by controlling the pressure of the precursors within the chamber, or some combination thereof. The amount of the precursors within the chamber can be controlled by, for example controlling the pressure of the precursor gases within the chamber.

In some embodiments, the pressure of the precursors can range from 0.01 milliTorrs (mTorr) to 0.5 mTorr. In some embodiments, the pressure of the precursors can range from 0.05 mTorr to 0.2 mTorr. In some embodiments, the ratio of the pressures of the two components correlates to the atomic percent of the two components in the film. In the case of a Fe and Co system, the ratio of the pressures of the Fe and Co precursor does correlate fairly well to the atomic percent of the components in the final film when the pressures are maintained within a range from 0.01 mTorr to 0.5 mTorr.

The magnetic material formed using disclosed methods can be described by the identity thereof. An example of a magnetic material that can be formed using disclosed methods is CoFeₓ, wherein x need not be an integer, and can range from greater than 0 to less than 100. It is understood that x refers to the atomic percent of the iron, with cobalt (in this example) having an amount of 100-x. In some embodiments, a magnetic material formed using disclosed method is CoFeₓ, wherein x need not be an integer, and can range from 10 to 90. In some embodiments, a magnetic material formed using disclosed method is CoFeₓ, wherein x need not be an integer, and can range from 40 to 70. In some embodiments, a magnetic material formed using disclosed method is CoFeₓ, wherein x need not be an integer, and can range from 55 to 65.

Layers of magnetic materials formed using disclosed methods may have various properties. For example, the magnetic material may have a magnetic flux density that is at least 1 Tesla (T). In some embodiments, the magnetic material that is formed using disclosed methods may have a magnetic flux density that is at least 1.8 T. In some embodiments, the magnetic material that is formed using disclosed methods may have a magnetic flux density that is at least 2.4 T. The magnetic material may also be described by the coercivity that it exhibits. In some embodiments, the magnetic material may have a relatively low coercivity. In some embodiments, the magnetic material may have a coercivity of not greater than 500 Oersted (Oe). In some embodiments, the magnetic material may have a coercivity from 10 Oe to 50 Oe. In some embodiments, the magnetic material may have a coercivity from 5 Oe to 20 Oe. The magnetic flux density and the coercivity of the magnetic material can be controlled, at least in part, by controlling the identity and amounts of the components in the magnetic material, for example.

Layers of magnetic material may also be described by the grain size of the material making up the layer. Grain size, as utilized herein refers to the average grain size. The grain size of a layer of magnetic material can be measured using cross-sectional or plan-views by TEM, SEM, FIB, top surface scans by AFM, or by XRD scans. In some embodiments, the grain size of a layer of magnetic material can be measured using TEM. In some embodiments, the grain size of a layer of magnetic material can range from 10 to 100 nm. In some embodiments, the grain size of a layer of magnetic material can range from 20 to 50 nm.

Layers of magnetic material may also be described by the amount, identity, or both of impurities in the magnetic material. As utilized herein, an impurity is any elements other than that which are desired in the magnetic material, for example, any other element besides cobalt and iron in a CoFeₓ layer of magnetic material. Identities, amounts, or both of impurities can be determined using various methods, including for example Auger electron spectroscopy, SEM-EDX, TEM-EDX, SIMS, XPS, or RBS for example. In some embodiments, identities, amounts, or both of impurities can be determined using Auger electron spectroscopy. In some embodiments, Auger electron spectroscopy can be utilized because it can provide information on all elements because of the wide spread (in energy, e.g., eV) of the spectra.

In some embodiments, layers of magnetic materials formed using disclosed methods can be described as having some level of oxygen (O) as an impurity. In some embodiments, layers of magnetic materials formed using disclosed methods can be described as having not greater than 5 atomic percent (at%) oxygen. In some embodiments, layers of magnetic materials formed using disclosed methods can be described as having not greater than 1 at% oxygen. In some embodiments, layers of magnetic materials formed using disclosed methods can be described as having levels of oxygen that are below those detectable using Auger electron spectroscopy (for example less than 0.1 at%).

Another type of impurities are non-magnetic impurities. Non-magnetic impurities, as used herein, refers to elements other than those desired (e.g., iron and cobalt in CoFeₓ) and oxygen (only because oxygen was considered and discussed separately above). Specific types of non-magnetic impurities can include, for example carbon. In some embodiments, layers of magnetic materials formed using disclosed methods can have levels of non-magnetic impurities that are below the detection level of Auger electron spectroscopy, which can generally detect very low levels of impurities, for example less than 0.1 at%. Magnetic materials formed using electrodeposition for example, may have levels of carbon, oxygen, or both, that are detectable by Auger electron spectroscopy, for example.

The layer of magnetic material can also be described by bulk properties of the magnetic material. For example, magnetic materials formed using disclosed methods will likely not have the same interfaces as those formed using methods that utilize nucleation. For example materials formed using sputtering techniques sometimes utilize a nucleating layer to promote desired crystal orientation or reduce grain size - such a layer would not be present in materials made using disclosed methods. Similarly, materials formed using nucleating methods will have interfaces present where one crystal grown from one nucleation site "runs" into another crystal from a second nucleation site. Similarly, materials formed using electrodeposition utilize a conducting seed layer to deposit the desired metal or alloy layer - such a layer would not necessarily be present in materials made using disclosed methods.

The layer of magnetic material or the disclosed method by which it was made can also be described by the degree to which the thickness can be controlled. The thickness of the material can be controlled by the rate of deposition and the time of deposition. In some embodiments, the rate of deposition can be controlled within a range from 2 nm/minute to 100 nm /minute.

Also disclosed herein are articles. An example of a disclosed article can be seen in **FIG. 1****.** The article **100** in **FIG. 1A** includes a substrate **105,** and a layer of magnetic material **110.** The substrate **105** and the layer of magnetic material **110** may have properties such as those discussed above. As seen in the example depicted in **FIG. 1A****,** the substrate **105** is not planar, but includes a feature, the substrate can also be described as having a non-planar surface. A non-planar surface of a substrate can include recesses, trenches, vias, stepped surfaces, and combinations thereof. Non-planar surfaces or structures within or on substrates can, but need not, have relatively high aspect ratios. The layer of magnetic material **110** can be described as mostly conformal or deposited conformally over the underlying surface of the substrate. Disclosed articles include layers of magnetic material having conformality to the non-planar surface of the substrate that is better than that of a physical vapor deposited (PVD) layer on the same non-planar surface. Conformality of a layer can be described by comparing the thickness of a horizontal portion of the layer to the thickness of a non-horizontal (for example vertical) portion of the layer.

In some embodiments, a percentage value of conformality can be obtained by dividing the thickness of a vertical layer by the thickness of the horizontal layer and multiplying by 100 to obtain a percentage. In some embodiments, a layer formed using disclosed methods can have a conformality that is greater than 35%. In some embodiments, a layer formed using disclosed methods can have a conformality that is greater than 40%. In some embodiments, a layer formed using disclosed methods can have a conformality that is greater than 50%, and in some embodiments, it can be about 60%. Whereas layers formed using previously utilized sputtering techniques can typically have a conformality of about 25 to 30%.

**FIG. 1B** depicts another example of a disclosed article that can include an optional seed layer **115.** The optional seed layer **115,** if present can be positioned between the substrate **105** and the layer of magnetic material **110.** An optional seed layer can provide enhanced nucleation of the magnetic material thereon. The optional seed layer may, but need not, be positioned directly beneath the layer of magnetic material so that the two are in direct contact. The optional seed layer may, but need not, be positioned directly on top of the substrate, so that the two are in direct contact. The optional seed layer can be made of various materials, including, for example ruthenium (Ru), tantalum (Ta), nickel (Ni), iron (Fe), CoFe, NiFe, Cu, TaN, TiN, CoFeB, NiCu, Pd, Pt, or combinations thereof. In some embodiments, the optional seed layer can be made of materials such as Ru, Ta, or NiFe, for example. In some embodiments, the optional seed layer can have thicknesses from 0.5 nm to 20 nm. In some embodiments, the optional seed layer can have thicknesses from 0.5 nm to 10 nm. In some embodiments, the optional seed layer can have a thickness of about 5 nm, for example.

Disclosed articles can include layers other than a layer of magnetic material and the optional disclosed seed layer, even though such other layers are not described herein. Exemplary articles in which disclosed methods could be utilized can include the following, for example: laminated side shields for a magnetic reader; write pole or a seed layer for a write pole in a perpendicular or heat assisted magnetic recording (HAMR) head; seed layer for contact pads; and a write pole or seed layers for side shields in various write heads. Similarly, exemplary articles in which disclosed methods can be utilized can include any article that could benefit from high conformality over steps and fill capability for trench for other applications such as magnetoresistive random access memory (MRAM), for example.

The present disclosure is illustrated by the following examples. It is to be understood that the particular examples, materials, amounts, and procedures are to be interpreted broadly in accordance with the scope and spirit of the invention as set forth herein.

### EXAMPLES

A chemical vapor deposition (CVD) apparatus where individual precursors were injected directly on the substrate surface by delivery lines, was utilized to deposit FeCo films from Fe(CO)₅ and Co₂(CO)₈ (Alfa Aesar (Ward Hill, MA)) by varying the pressure of the Fe(CO)₅ and Co₂(CO)₈, and deposition time, as indicated in Table 1 below. The compositions (Fe at % and Co at % were found using Auger, SEM-EDX, and ICP-OES). The magnetic properties were measured using a Vibrating Sample Magnetometer.

**Table 1**

| Sample | Fe/Co Pressure mTorr | Deposition Time (minutes) | Fe (at%) | Co (at%) | TEM thickness (nm) | Hce | Hch | Bs |
|---|---|---|---|---|---|---|---|---|
| 1 | 0.135/0.070 = 66/34 | 3.4 | 67 | 32 | 212 | 17.5 | 24.3 | 1.94 |
| 2 | 0.114/0.071 = 61/39 | 4 | 59 | 41 | 214 | 22 | 17.3 | 2.12 |
| 3 | 0.169/0.071 = 70/30 | 4 | 62 | 38 | 143 | 10.5 | 5.62 | 2.28 |
| 4 | 0.073/0.073 = 50/50 | 5 | 42 | 58 | 135 | 9.96 | 15.3 | 2.39 |

Thus, embodiments of methods of forming magnetic materials and articles formed thereby are disclosed. The implementations described above and other implementations are within the scope of the following claims. One skilled in the art will appreciate that the present disclosure can be practiced with embodiments other than those disclosed. The disclosed embodiments are presented for purposes of illustration and not limitation.

## Claims

**1.** A method of forming a layer (110) of magnetic material on a substrate (105), the method comprising:
configuring a substrate in a chamber;
controlling the temperature of the substrate at a substrate temperature, the substrate temperature being at or below about 250° C; and
introducing one or more precursors into the chamber, the one or more precursors comprising: cobalt (Co), nickel (Ni), iron (Fe), or combinations thereof,
wherein the precursors chemically decompose at the substrate temperature, and
wherein a layer of magnetic material is formed on the substrate, the magnetic material comprising at least a portion of the one or more precursors, and the magnetic material having a magnetic flux density of at least about 1 Tesla (T).

**2.** The method of claim 1, wherein the substrate temperature is at or below about 225° C.

**3.** The method of claim 1, wherein the substrate temperature is at about 200° C.

**4.** The method of any one of the preceding claims, wherein the one or more precursors comprise carbonyl moieties.

**5.** The method of any one of claims 1 to 3, wherein the one or more precursors are selected from: Fe(CO)₅, Co₂(CO)₈, and combinations thereof.

**6.** The method of any one of claims 1 to 3, wherein the magnetic material comprises CoFeₓ, wherein x can range from greater than 0 to less than 100.

**7.** The method of claim 6, wherein the CoFeₓ has a magnetic flux density of about 2.4 Tesla (T).

**8.** An article comprising:
a substrate (105); and
a layer (110) of magnetic material deposited on the substrate,
wherein the magnetic material comprises cobalt (Co), iron (Fe), nickel (Ni), or a combination thereof, the magnetic material has a magnetic flux density of at least about 1 Tesla, the grain size of the magnetic material is from about 10 nm to about 50 nm, and the magnetic material includes less than about 1% oxygen by weight and includes non-magnetic impurities at a level that is undetectable by Auger Electron Spectroscopy.

**9.** The article of claim 8 further comprising a seed layer (115) positioned between the substrate and the layer of magnetic material.

**10.** The article of claim 9, wherein the seed layer is sputter deposited ruthenium (Ru), tantalum (Ta), or nickel iron (NiFe).

**11.** The article of claim 10, wherein the seed layer has a thickness of about 5 nm.

**12.** The article of any one of claims 8 to 11, wherein the magnetic material comprises Co and Fe, Ni and Fe, or Co, Ni, and Fe.

**13.** The article of any one of claims 8 to 12, wherein the magnetic material comprises CoFeₓ, wherein x can range from 0 to less than 100.

**14.** The article of any one of claims 8 to 13, wherein the substrate has a non-planar surface and the layer of magnetic material has a surface that conforms to the non-planar surface of the substrate.

**15.** The article of claim 14, wherein the conformality of the magnetic layer to the non-planar surface of the substrate is better than that of a physical vapor deposited (PVD) layer on the same non-planar surface.

**16.** A method of forming a layer (110) of magnetic material on a substrate (105), the method comprising:
configuring a substrate in a chamber;
controlling the temperature of the substrate at a substrate temperature, the substrate temperature being at or below about 250° C; and
introducing one or more precursors into the chamber, the one or more precursors comprise carbonyl compounds of cobalt (Co), nickel (Ni), iron (Fe), or combinations thereof,
wherein a layer of magnetic material is formed on the substrate, the magnetic material comprising at least a portion of the one or more precursors, and the magnetic material having a magnetic flux density of at least about 1 Tesla (T).

**17.** The method of claim 16, wherein the substrate temperature is at or below about 225° C.

**18.** The method of claim 16, wherein the substrate temperature is at about 200° C.

**19.** The method of claim 16, wherein the precursors are Fe(CO)₅ and Co₂(CO)₈.

**19.** The method of claim 18, wherein the pressure of the precursors in the chamber are controlled and the pressure of the Fe(CO)₅ is not higher than that of the Co₂(CO)₈.

**20.** The method of claim 16, wherein the rate of formation of the layer of the magnetic material can be controlled in the range of 2 to 100 nm /minute.
